# EUROPÄISCHE PATENTSCHRIFT

(11) **EP 0 981 458 B1**
(45) Veröffentlichungstag und Bekanntmachung des Hinweises auf die Patenterteilung: **24.10.2001**
(21) Anmeldenummer: 98920486.2
(22) Anmeldetag: 24.03.1998
(51) Int. Cl.: B60J 10/00, E05F 15/00, B60J 10/12

(54) **DICHTUNGSPROFIL ZUR ABDICHTUNG EINER KRAFTBETÄTIGTEN SCHLIESSEINRICHTUNG**
SEALING SECTION FOR A POWER-OPERATED CLOSING DEVICE
PROFILE D'ETANCHEITE POUR ETANCHEIFIER UN SYSTEME DE FERMETURE A COMMANDE AUTOMATIQUE

(30) Priorität: 16.05.1997 DE 19720713
(43) Veröffentlichungstag der Anmeldung: 01.03.2000
(73) Patentinhaber: METZELER Automotive Profiles GmbH, D-88131 Lindau (DE)
(72) Erfinder: GLAGOW, Klaus, D-88142 Wasserburg (DE); AHMAD, Rashid, D-88131 Lindau (DE); WESTERHOFF, Bernd, D-87463 Dietmannsried (DE)
(74) Vertreter: Preissner, Nicolaus, Dipl.-Ing.
(86) Internationale Anmeldenummer: EP9801726
(87) Internationale Veröffentlichungsnummer: WO9852785

(56) Entgegenhaltungen:
- EP-A- 0 405 351
- EP-A- 0 774 558
- DE-A- 4 329 535

## Beschreibung

Die vorliegende Erfindung betrifft ein Dichtungsprofil zur Abdichtung einer kraftbetätigten Schließeinrichtung, insbesondere zur Abdichtung von Schiebedächern an Kraftfahrzeugen, mit einem Hohlprofil aus einem elastomeren Material, das einen im wesentlichen ebenen Basisbereich und einen aufgesetzten gewölbten Profilbereich unter Einschluß einer Hohlkammer aufweist, wobei am Basisbereich oder am gewölbten Profilbereich zwei beabstandete Kontaktelemente vorgesehen sind, die als koextrudierte, elektrisch leitfähige Profilbereiche ausgebildet sind, durch isolierende Profilbereiche voneinander getrennt sind und in Längsrichtung des Hohlprofiles verlaufen, wobei den Kontaktelementen eine an der Innenseite des gewölbten Profilbereiches oder an dem Basisbereich zugeordnete elektrisch leitfähige Kontaktfläche zugeordnet ist, die als koextrudierter, leitfähiger Profilbereich ausgebildet ist und der Kontakt der Kontaktelemente und/oder der Kontaktfläche mit den Kontaktelementen einen Schaltvorgang zur Steuerung des Antriebsaggregates der Schließeinrichtung auslöst.

Ein derartiges Dichtungsprofil ist aus der EP-A 0 774 558, die dem gattungsbildenden Oberbegriff des Anspruchs 1 entspricht, bekannt. Es weist ein Hohlprofil aus einem elastomeren Material mit einem im wesentlichen ebenen Basisbereich und einem aufgesetzten gewölbten Profilbereich unter Einschluß einer Hohlkammer auf. Es sind im wesentlichen rechteckige Kontaktelemente vorgesehen.

Ein weiteres Dichtungsprofil ist aus der DE 43 08 215 C1 bekannt. Dieses Dichtungsprofil ist als Spaltdichtung für einen starren Deckel an einem Fahrzeugdach konzipiert. Das Dichtungsprofil ist mit einem Hohlprofil ausgebildet, das einen im wesentlich ebenen Basisbereich und einen gewölbten Profilbereich unter Einschluß einer Hohlkammer aufweist. Derartige Spaltdichtungen kommen insbesondere bei Schiebedächern zum Einsatz und dichten den zwischen Schiebedach und Dachöffnung vorliegenden Spalt ab. Zur Festlegung des Dichtungsprofils ist an dem Basisbereich ein Ansatz vorgesehen, der formschlüssig in einen am Deckel festgelegten Rahmen eingreift.

Bei kraftbetätigten Schließeinrichtungen, insbesondere elektrisch betätigten Schiebedächern an Kraftfahrzeugen, besteht die Gefahr von Verletzungen, wenn beim Schließen der Schließeinrichtung Körperteile in den Schließspalt gelangen. Um ein derartiges Einklemmen zu vermeiden, sind bei derartigen kraftbetätigten Schließeinrichtungen Einklemmschutzvorrichtungen bekannt.

In der DE 43 29 535 A1 wird ein Einklemmschutz für eine kraftbetätigte Schließeinrichtung beschrieben, der aus einem extrudierten Hohlprofil aus elastomerem Material besteht. Das Hohlprofil weist beabstandete, koextrudierte leitfähige Bereiche auf, in denen metallische Leiter zur Widerstandsverringerung integriert sind. Die leitfähigen Bereiche, die als Kontaktelemente dienen, werden durch Zugabe von leitfähigem Material zum elastomeren Material erhalten. In diesem Zusammenhang ist es bekannt, das Einklemmschutzprofil als separates Teil oder integral in stofflicher Verbindung mit Dichtungsprofilen einzusetzen. Im Einklemmfall werden die Kontaktelemente zusammengeführt, womit ein Schaltvorgang zur Steuerung des Antriebsaggregates der Schließeinrichtung ausgelöst wird.

In der EP 405 351 B1 wird ein Einklemmschutz beschrieben, der ein Hohlprofil mit einer Hohlkammer aufweist. An dem Hohlprofil sind koextrudierte leitfähige Bereiche vorgesehen, die als leistenartige Vorsprünge ausgebildet sind und in die Hohlkammer einragen. An dem Basisbereich ist eine Gegenkontaktfläche vorgesehen, die ebenfalls als koextrudierter, leitfähiger Bereich ausgebildet ist. Ein derartiger Einklemmschutz ist für kraftbetätigte Anlagen wie Rolltore, Rollgitter und Hebe-Arbeitsbühnen und dergleichen konzipiert und soll keine Dichtfunktion übernehmen. Im Einklemmfall werden die als leistenartige Vorsprünge ausgebildeten Kontaktelemente unter Überbrückung der Hohlkammer an die Gegenkontaktfläche herangeführt. Hierdurch wird ein Schaltimpuls für das Antriebsaggregat der Schließeinrichtung ausgelöst.

Der Erfindung liegt die Aufgabe zugrunde, ein Dichtungsprofil der eingangs genannten Art vorzuschlagen, bei dem eine Einklemmschutzeinrichtung ohne Beeinträchtigung der Dichtfunktion integriert ist.

Zur Lösung dieser Aufgabe wird bei einem Dichtungsprofil der eingangs genannten Art erfindungsgemäß vorgeschlagen, daß die Kontaktelemente in die Hohlkammer einragen, eine näherungsweise L-förmige Querschnittsform aufweisen und spiegelbildlich zueinander angeordnet sind.

Das erfindungsgemäße Dichtungsprofil zeichnet sich dadurch aus, daß trotz integrierter Einklemmschutzeinrichtung für die Dichtfunktion ein ausreichender Einfederungsweg zur Verfügung steht. Die integrierte Einklemmschutzeinrichtung beeinträchtigt somit nicht die Dichtfunktion des Dichtungsprofiles. Bei dem erfindungsgemäßen Dichtungsprofil wird bei einer Paralleleinklemmung die Gegenfläche an die beiden in die Hohlkammer ragenden Kontaktelemente herangeführt, wodurch der Schaltvorgang ausgelöst wird. Im Falle einer Schrägeinklemmung kann abhängig vom Angriffswinkel entweder die Kontaktierung über die Kontaktfläche oder durch Zusammenführung der beiden Kontaktelemente bewirkt werden. Diese unterschiedliche Kontaktierweise abhängig vom Angriffswinkel gewährleistet einen ausreichenden Einfederungsweg zur Erfüllung der Dichtfunktion. Weiterhin zeichnet sich das erfindungsgemäße Dichtungsprofil durch eine einfache Herstellung aus, da es als einteiliges Koextrudat herstellbar ist. Die Einteiligkeit führt auch zu einer hohen Haltbarkeit, da die Kontaktelemente stofflich integriert sind.

Die Kontaktelemente können hierbei entweder an der Basisfläche oder an der Innenseite des gewölbten Profilbereiches angeordnet sein.

Das erfindungsgemäße Dichtungsprofil ist insbesondere für Schiebedächer an Kraftfahrzeugen konzipiert. Es kann aber auch als Türdichtung, Kofferraumdeckeldichtung oder für ähnliche Anwendungen verwendet werden.

Vorteilhafte Ausgestaltungen der Erfindung ergeben aus den Unteransprüchen.

Um den Durchgangswiderstand zu verringern, ist es vorteilhaft, wenn in die Kontaktelemente und/oder die Kontaktfläche ein durchlaufender metallischer Leiter eingebettet ist.

Vorteilhaft sind die metallischen Leiter in einer Ebene angeordnet, die parallel zu einer Befestigungsfläche des Basisbereichs liegt. Hierdurch werden Materialspannungen beim Herumführen um Ecken vermieden.

Vorteilhaft sind die leitfähigen Profilbereiche durch Zugabe von elektrisch leitfähigem Material zum elastomeren Material hergestellt. Hierbei kann als leitfähiges Material Ruß, Graphit oder Metallpulver eingesetzt werden.

In weiterer Ausgestaltung wird vorgeschlagen, daß die Außenseite des aufgesetzten Profilbereiches mit einer Beflockung versehen ist.

Bei einer weiteren Ausgestaltung ist an der Außenseite des Basisbereiches ein Befestigungsmittel, vorteilhaft ein Klebeband, vorgesehen.

Nachfolgend wird die Erfindung anhand eines vorteilhaften Ausführungsbeispieles näher erläutert, das in schematischer Weise in der Zeichnung dargestellt ist. Dabei zeigen:
- Figur 1: einen Querschnitt durch das erfindungsgemäße Dichtungsprofil im Ausgangszustand,
- Figur 2: das Dichtungsprofil gemäß Figur 1 im Zustand der Paralleleinklemmung;
- Figur 3: das Dichtungsprofil gemäß Figur 1 im Zustand der Schrägeinklemmung unter 20° Belastung und
- Figur 4: das Dichtungsprofil gemäß Figur 1 im Zustand der Schrägeinklemmung unter 45° Belastung.

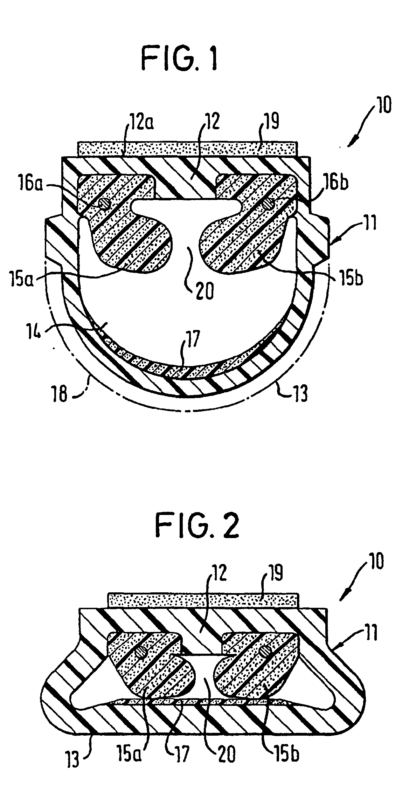

Das in Figur 1 dargestellte Dichtungsprofil 10 ist als Spaltdichtung für ein nicht dargestelltes Schiebedach an einem Kraftfahrzeug konzipiert. Das Dichtungsprofil 10 weist ein Hohlprofil 11 auf, das aus einem elastomeren Material, insbesondere EPDM, extrudiert ist. Das Hohlprofil 11 besitzt einen im wesentlichen ebenen Basisbereich 12, der an seiner Außenseite mit einem Klebeband 19 zur Festlegung an einem nicht dargestellten Rahmen des Schiebedaches versehen ist. An die äußeren Kanten des Basisbereiches 12 schließt sich ein gewölbter Profilbereich 13 an, der zusammen mit dem Basisbereich 12 eine Hohlkammer 14 des Hohlprofiles 11 begrenzt. Die Außenseite des gewölbten Profilbereiches 13 ist mit einer Beflockung 18 versehen.

An dem Basisbereich 12 sind zwei durch einen Spalt 20 beabstandete Kontaktelemente 15a, 15b vorgesehen, die als koextrudierte leitfähige Bereiche ausgebildet sind. Hierbei wird die Leitfähigkeit der Kontaktelemente 15a, 15b durch Zugabe von leitfähigem Material, beispielsweise Ruß, Graphit oder Metallpartikel, zum elastomeren Material erhalten. Zur Verringerung des Durchgangswiderstandes sind in die Kontaktelemente 15a, 15b, metallische Leiter 16a, 16b durch Extrusion eingebracht. Die metallischen Leiter 16a, 16b liegen in einer Ebene, die parallel zu einer Befestigungsfläche 12a des Basisbereichs 12 ausgerichtet ist. Hierdurch werden insbesondere beim Herumführen des Dichtungsprofils 10 um Ecken Materialspannungen vermieden.

Die Kontaktelemente 15a, 15b besitzen eine näherungsweise L-förmige Querschnittsform, wobei die Kontaktelemente 15a, 15b mit Abstand zueinander und spiegelbildlich angeordnet sind. Die leistenartigen Kontaktelemente 15a, 15b erstrecken sich in Längsrichtung des Hohlprofiles 11.

An der gegenüberliegenden Innenseite der Hohlkammer 14 ist eine elektrisch leitfähige Kontaktfläche 17 vorgesehen, die ebenfalls als koextrudierter, leitfähiger Profilbereich ausgebildet ist. Auch hier wird die Leitfähigkeit durch Zugabe von leitfähigem Material zu dem elastomeren Material erhalten.

Das Dichtungsprofil 10 ist als einstückiges Koextrudat hergestellt, wodurch die Herstellung besonders einfach und die Haltbarkeit verbessert ist, da insbesondere die Kontaktelemente als integraler Bestandteil des Hohlprofiles 11 ausgebildet sind.

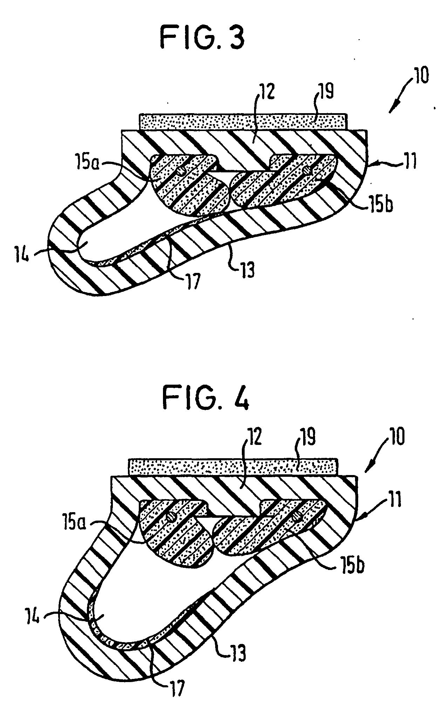

Die Funktionsweise des Dichtungsprofiles 10 soll anhand der Figuren 2 und 4, die unterschiedliche Einklemmfälle zeigen, näher erläutert werden.

Figur 2 zeigt den sogenannten Paralleleinklemmfall, bei dem die Beaufschlagung näherungsweise parallel zu dem Basisbereich 12 erfolgt. Wie aus Figur 2 ersichtlich ist, wird im Einklemmfall die Kontaktfläche 17 durch Überbrückung der Hohlkammer 14 an die Kontaktelemente 15a, 15b herangeführt. Hierdurch werden die Kontaktelemente 15a, 15b elektrisch miteinander verbunden, wodurch ein Schaltimpuls bezüglich des Antriebsaggregates des Schiebedaches ausgelöst wird.

Figur 3 zeigt das Dichtungsprofil 10 bei der sogenannten Schrägeinklemmung, bei der die Beaufschlagung unter einem Angriffswinkel von ca. 20° erfolgt. Wie aus dieser Darstellung hervorgeht, werden bei diesem Einklemmfall die Kontaktelemente 15a, 15b in Berührung miteinander gebracht, wodurch ein Schaltimpuls ausgelöst wird. Gleichzeitig berührt auch die Kontaktfläche 17 die beiden Kontaktelemente 15a, 15b. Der gewölbte Profilbereich 13 wird in Richtung der Beaufschlagung seitlich verschoben.

Figur 4 zeigt einen Schrägeinklemmfall mit Beaufschlagung unter ca. 45°. Hierbei wird der Schaltimpuls lediglich durch Kontakt zwischen den beiden Kontaktelementen 15a, 15b ausgelöst, die unter Überbrükkung des zwischen den Kontaktelementen vorliegenden Spaltes 20 zusammengeführt werden.

Trotz der integrierten Einklemmschutzvorrichtung kann das Dichtungsprofil 10 die an die Dichtfunktion und den hierfür erforderlichen Einfederungsweg gestellten Anforderungen voll erfüllen. Insbesondere steht zur Erfüllung der Dichtfunktion ein ausreichender Einfederungsweg zur Verfügung.

Neben Schiebedächern kann das erfindungsgemäße Dichtungsprofil auch an Türdichtungen oder Kofferraumdeckeldichtungen eingesetzt werden.

## Patentansprüche

1. Dichtungsprofil zur Abdichtung einer kraftbetätigten Schließeinrichtung, insbesondere zur Abdichtung von Schiebedächern an Kraftfahrzeugen, mit einem Hohlprofil (11) aus einem elastomeren Material, das einen im wesentlichen ebenen Basisbereich (12) und einen aufgesetzten gewölbten Profilbereich (13) unter Einschluß einer Hohlkammer (14) aufweist, wobei am Basisbereich (12) oder am gewölbten Profilbereich (13) zwei beabstandete Kontaktelemente (15a, 15b) vorgesehen sind, die als koextrudierte, elektrisch leitfähige Profilbereiche ausgebildet sind, durch isolierende Profilbereiche voneinander getrennt sind und in Längsrichtung des Hohlprofiles (11) verlaufen, wobei den Kontaktelementen (15a, 15b) eine an der Innenseite des gewölbten Profilbereiches (13) oder an dem Basisbereich (12) zugeordnete elektrisch leitfähige Kontaktfläche (17) zugeordnet ist, die als koextrudierter, leitfähiger Profilbereich ausgebildet ist und der Kontakt der Kontaktelemente (15a, 15b) und/oder der Kontaktfläche (17) mit den Kontaktelementen (15a, 15b) einen Schaltvorgang zur Steuerung des Antriebsaggregates der Schließeinrichtung auslöst, **dadurch gekennzeichnet, daß** die Kontaktelemente (15a, 15b) in die Hohlkammer (14) einragen, eine näherungsweise L-förmige Querschnittsform aufweisen und spiegelbildlich zueinander angeordnet sind.

2. Dichtungsprofil nach Anspruch 1, **dadurch gekennzeichnet, daß** in die Kontaktelemente (15a, 15b) und/oder die Kontaktfläche (17) ein durchlaufender metallischer Leiter (16a, 16b) eingebettet ist.

3. Dichtungsprofil nach Anspruch 1 oder 2, **dadurch gekennzeichnet, daß** die metallischen Leiter (16a, 16b) in einer Ebene angeordnet sind, die parallel zu einer Befestigungsfläche (12a) des Basisbereichs (12) liegt.

4. Dichtungsprofil nach einem der Ansprüche 1 bis 3, **dadurch gekennzeichnet, daß** die leitfähigen Profilbereiche (15a, 15b, 17) durch Zugabe von elektrisch leitfähigem Material zum elastomeren Material hergestellt sind.

5. Dichtungsprofil nach Anspruch 4, **dadurch gekennzeichnet, daß** als leitfähiges Material Ruß, Graphit oder Metallpulver eingesetzt wird.

6. Dichtungsprofil nach einem der Ansprüche 1 bis 5, **dadurch gekennzeichnet, daß** die Außenseite des gewölbten Profilbereiches mit einer Beflockung (18) versehen ist.

7. Dichtungsprofil nach einem der Anspruch 1 bis 6, **dadurch gekennzeichnet, daß** an der Außenseite des Basisbereiches (12) ein Befestigungsmittel, vorteilhaft ein Klebeband (19) vorgesehen ist.

## Claims

1. A weatherseal for sealing a powered closing device, more particularly for sealing automotive sunroofs, including an elastomeric hollow profile (11) comprising a substantially planar base portion (12) and a mounted domed profile portion (13) circumscribing a hollow chamber (14), at said base portion (12) or at said domed profile portion (13) two contact elements (15a, 15b) being provided spaced away from each other configured as coextruded electrically conductive profile portions separated from each other by insulating profile portions, said contact elements (15a, 15b) being oriented in the longitudinal direction of said hollow profile (11), said contact elements (15a, 15b) being assigned an electrically conductive contact surface area (17) arranged at the inner side of said profile portion or at said base portion (12), said contact surface area (17) being configured as said coextruded electrically conductive profile portion and the contact of said contact elements (15a, 15b) and/or of said contact surface area (17) together with said contact elements (15a, 15b) activating a switching action for controlling the drive assembly of said closing device, **characterized in that** said contact elements (15a, 15b) protrude into said hollow chamber (14), comprise an approximately L-shaped cross-sectional shape and are arranged mirror-inversely to each other.

2. The weatherseal as set forth in claim 1, **characterized in that** a full-length metallic conductor (16a, 16b) is embedded in said contact elements (15a, 15b) and/or said contact surface area (17).

3. The weatherseal as set forth in any of the claims 1 or 2, **characterized in that** said metallic conductors (16a, 16b) are arranged in a plane located parallel to a fastening surface area (12a) of said base portion (12).

4. The weatherseal as set forth in any of the claims 1 to 3, **characterized in that** said conducting profile portions (15a, 15b, 17) are produced by admixing electrically conductive material to said elastomeric material.

5. The weatherseal as set forth in claim 4, **characterized in that** carbon black, graphite or powdered metal is applied as said conductive material.

6. The weatherseal as set forth in any of the claims 1 to 5, **characterized in that** the outer side of said domed profile portion is provided flaked (18).

7. The weatherseal as set forth in any of the claims 1 to 6, **characterized in that** a fastener, to advantage a sticky tape (19), is provided at the outer side of said base portion (12).

## Revendications

1. Profilé d'étanchéité pour étancher un système de fermeture motorisé, en particulier pour étancher des toits coulissants sur des véhicules automobiles, comportant un profilé creux (11) en un matériau élastomère qui comprend une zone de base (12) sensiblement plane et une zone profilée bombée (13) superposée, en enfermant une chambre creuse (14), dans lequel deux éléments de contact (15a, 15b) écartés l'un de l'autre sont prévus sur la zone de base (12) ou sur la zone profilée bombée (13), qui sont réalisés sous forme de zones profilées coextrudées électriquement conductrices, qui sont séparés l'un de l'autre par des zones profilées d'isolation et qui s'étendent en direction longitudinale du profilé creux (11), dans lequel une surface de contact (17) électriquement conductrice prévue sur le côté intérieur de la zone profilée bombée (13) ou sur la zone de base (12) est associée aux éléments de contact (15a, 15b), ladite surface de contact étant réalisée sous forme de zone profilée coextrudée conductrice et le contact des éléments de contact (15a, 15b) et/ou de la surface de contact (17) avec les éléments de contact (15a, 15b) déclenche une opération de commutation pour commander l'unité d'entraînement du système de fermeture, **caractérisé en ce que** les éléments de contact (15a, 15b) pénètrent dans la chambre creuse (14), présentent une section approximativement en forme de L, et sont disposés à symétrie l'un par rapport à l'autre.

2. Profilé d'étanchéité selon la revendication 1, **caractérisé en ce que** dans les éléments de contact (15a, 15b) et/ou dans la surface de contact (17) est noyé un conducteur métallique continu (16a, 16b).

3. Profilé d'étanchéité selon l'une ou l'autre des revendications 1 et 2, **caractérisé en ce que** les conducteurs métalliques (16a, 16b) sont agencés dans un plan qui se situe parallèlement à une surface de fixation (12a) de la zone de base (12).

4. Profilé d'étanchéité selon l'une quelconque des revendications 1 à 3, **caractérisé en ce que** les zones profilées conductrices (15a, 15b, 17) sont réalisées par addition de matériau électriquement conducteur au matériau élastomère.

5. Profilé d'étanchéité selon la revendication 4, **caractérisé en ce que** le matériau conducteur utilisé est du noir de carbone, du graphite ou de la poudre métallique.

6. Profilé d'étanchéité selon l'une quelconque des revendications 1 à 5, **caractérisé en ce que** le côté extérieur de la zone profilée bombée est pourvu d'un flocage (18).

7. Profilé d'étanchéité selon l'une quelconque des revendications 1 à 6, **caractérisé en ce qu'**un moyen de fixation, avantageusement un ruban collant (19), est prévu sur le côté extérieur de la zone de base (12).
